(19) Europäisches Patentamt
European Patent Office
Office européen des brevets

(11) **EP 2 458 849 B1**

(12) **FASCICULE DE BREVET EUROPEEN**

(45) Date de publication et mention de la délivrance du brevet:
**16.04.2014 Bulletin 2014/16**

(51) Int Cl.:
*H04N 5/3745* *(2011.01)*  *H04N 5/359* *(2011.01)*
*H04N 5/374* *(2011.01)*

(21) Numéro de dépôt: **11354070.2**

(22) Date de dépôt: **28.11.2011**

(54) **Circuit de détection à double échantillonnage corrélé avec circuit d'anti-éblouissement amélioré**

Detektionsschaltung mit doppelter korrelierter Signalabtastung und verbesserter Überlaufsvorrichtung

Correlated double sampling detection circuit with an improved anti-blooming circuit

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.11.2010 FR 1004629**

(43) Date de publication de la demande:
**30.05.2012 Bulletin 2012/22**

(73) Titulaire: **Société Française de Détecteurs Infrarouges - SOFRADIR**
**92290 Châtenay Malabry (FR)**

(72) Inventeurs:
• **Ricard, Nicolas**
**38500 Coublevie (FR)**
• **Salvetti, Frédéric**
**38330 Montbonnet (FR)**

(74) Mandataire: **Talbot, Alexandre et al**
**Cabinet Hecké**
**Europole, BP 1537**
**10, rue d'Arménie**
**38025 Grenoble Cedex 1 (FR)**

(56) Documents cités:
**US-A- 5 448 056**    **US-A1- 2003 034 433**

## Description

## Domaine technique de l'Invention

L'invention est relative à un circuit de détection avec double échantillonnage corrélé comportant :

- un premier amplificateur transimpédance,
- une photodiode connectée à une entrée du premier amplificateur transimpédance,
- un second amplificateur transimpédance,
- un condensateur d'échantillonnage connecté entre une sortie du premier amplificateur transimpédance et une entrée du second amplificateur transimpédance.

L'invention est également relative à un procédé de lecture du rayonnement par un circuit de détection.

## État de la technique

Comme illustré à la figure 1 et dans le document US 5,448,056, dans les circuits de détection conventionnels, une photodiode 1, polarisée en inverse, délivre un courant représentatif d'une scène observée. La photodiode 1 délivre ce courant, pendant une durée prédéfinie, à un module de lecture 2.

Le module de lecture 2 comporte un premier dispositif intégrateur 3 qui est constitué par un amplificateur transimpédance capacitif. L'amplificateur transimpédance capacitif comporte un amplificateur 4 connecté en contre-réaction par un condensateur d'intégration $C_{INT}$. La cathode de la photodiode 1 est connectée à une première entrée de l'amplificateur 4 et un potentiel de substrat $V_{Sub}$ est appliqué à l'anode de la photodiode 1. Tant que le potentiel de la première entrée de l'amplificateur 4 est supérieur au potentiel de substrat $V_{Sub}$, la photodiode 1 est polarisée en inverse et fonctionne de manière attendue.

Afin d'éliminer une partie du bruit parasite provenant de l'entrée du circuit de lecture, ce dernier comporte une fonction de double échantillonnage corrélé. De ce fait, le module de lecture 2 du circuit de détection comporte un second module intégrateur 5 associé au premier module intégrateur 2. Un condensateur d'échantillonnage $C_{DS}$ relie la sortie du premier module intégrateur 2 à l'entrée du second module intégrateur 5.

Le second module intégrateur 5 est un amplificateur transimpédance capacitif qui comporte un second amplificateur 6 avec un condensateur d'amplification $C_{AMP}$. Le condensateur d'amplification $C_{AMP}$ est connecté en contre-réaction aux bornes du second amplificateur 6.

Le courant émis par la photodiode 1 est intégré par le condensateur d'intégration $C_{INT}$ du premier module intégrateur 2. Le premier module intégrateur 2 délivre en sortie une tension $V_{S1}$ qui est représentative de l'éclairement de la scène observée par l'intermédiaire du condensateur d'intégration $C_{INT}$.

Cette information est transmise au second module intégrateur 5 par l'intermédiaire du condensateur d'échantillonnage $C_{DS}$. Le second module intégrateur 5 délivre en sortie une tension $V_{S2}$ qui est, au final, représentative de l'éclairement de la scène observée par la photodiode 1.

Cependant, si la photodiode 1 est éclairée par un rayonnement trop intense le courant qui est intégré dans le condensateur d'intégration $C_{INT}$ devient également important. La différence de potentiel qui existe aux bornes du condensateur $C_{INT}$ vient modifier le potentiel $V_{E1}$ de la première entrée de l'amplificateur 4 et donc la polarisation de la photodiode 1. Dans le cas où le courant délivré par la photodiode 1 est très important, la différence de potentiels aux bornes de la photodiode 1 évolue de sorte que la photodiode devient dépolarisée. Cette dépolarisation entraîne une modification, une augmentation, de la surface de collecte des photons dans les photodiodes adjacentes. Ainsi, quand une photodiode est trop éclairée, il y a un effet d'éblouissement sur les photodiodes adjacentes qui délivrent un courant représentatif d'un éclairement plus important que la réalité.

Dans le document US 2003/0034433, illustré à la figure 2, un module de lecture comportant un unique module intégrateur est réalisé avec un transistor d'anti-éblouissement. Un transistor 7 de type nMOS est connecté entre la première entrée et la sortie de l'amplificateur 4.

Le transistor 7 de type nMOS est connecté, en parallèle, aux bornes du condensateur 4. Ce transistor 7 a pour but d'éviter la dépolarisation de la photodiode 1 en empêchant que le potentiel $V_{E1}$ de la première entrée de l'amplificateur 4 ne chute plus bas qu'une valeur limite. Une tension d'anti-éblouissement $V_{AB}$ est donc appliquée sur l'électrode de grille pour que le transistor 7 devienne passant avant que la photodiode 1 ne soit dépolarisée. La tension d'anti-éblouissement $V_{AB}$ est choisie de sorte que la photodiode 1 soit toujours polarisée en inverse, c'est-à-dire qu'elle ne soit pas polarisée en direct. La tension d'anti-éblouissement $V_{AB}$ est définie par rapport au potentiel $V_{E1}$ de la première entrée de l'amplificateur 3.

Au fur et à mesure que la photodiode 1 tire du courant, l'amplificateur 4 fournit ce courant à travers la capacité d'intégration $C_{INT}$, tout en maintenant la première entrée de l'amplificateur 4 à la valeur de tension imposée par la seconde entrée. Cette charge du condensateur d'intégration $C_{INT}$ se traduit par une augmentation de la tension de sortie $V_{S1}$ de l'amplificateur 4. A partir du moment où la tension de sortie $V_{S1}$ atteint une valeur limite, le potentiel $V_{E1}$ de la première entrée de l'amplificateur 4 diminue. Cette diminution a lieu jusqu'à ce que la différence de potentiel entre l'électrode de grille au potentiel $V_{AB}$ et la première entrée de l'amplificateur 3 n'atteigne la tension de seuil du transistor 7. Une fois cette tension de seuil atteinte, le transistor 7 devient passant, les charges supplémentaires sont évacuées et le potentiel $V_{E1}$ de la première entrée de l'amplificateur 3 n'évolue plus. Ainsi, si le potentiel $V_{E1}$ de la première entrée atteint un certain seuil prédéfini, le transistor nMOS devient passant et les charges supplémentaires sont évacuées. Le potentiel $V_{E1}$ de la première entrée ne peut donc plus évoluer au-delà d'un potentiel limite.

Le circuit proposé dans le document US 2003/0034433 répond de manière théorique à la problématique générale du phénomène d'éblouissement, mais ce circuit n'est pas satisfaisant car les contraintes qui pèsent sur une utilisation industrielle de cette architecture sont trop nombreuses et rendent ce circuit inutilisable d'un point de vue industriel.

## Objet de l'invention

L'invention a pour objet un circuit de détection à double échantillonnage corrélé qui tend à corriger les phénomènes d'éblouissement et qui soit facile à mettre en oeuvre tout en assurant une réalisation fiable et répétable pour une intégration industrielle.

Le dispositif selon l'invention est caractérisé en ce qu'il comprend un circuit d'anti-éblouissement connecté entre l'entrée et la sortie du premier amplificateur transimpédance, le circuit d'anti-éblouissement comportant :

- des moyens de comparaison de la tension en sortie du premier amplificateur transimpédance à une tension de consigne définie à partir de la tension de sortie du second amplificateur transimpédance, et
- des moyens d'application d'un courant de contre-réaction à l'entrée du premier amplificateur transimpédance de manière à limiter la tension de sortie $(V_{S1})$ du premier amplificateur transimpédance (3)lorsque la différence entre la tension de sortie et la tension de consigne atteint une valeur limite.

L'invention a également pour objet un procédé de lecture qui soit facile à mettre en oeuvre tout en assurant une réalisation fiable et répétable pour une intégration industrielle.

Le procédé selon l'invention est caractérisé en ce qu'il comporte les étapes suivantes :

- générer un courant à partir d'une photodiode polarisée en inverse vers une entrée d'un premier amplificateur transimpédance, une sortie du premier amplificateur transimpédance étant connectée à une entrée d'un second amplificateur transimpédance par un condensateur d'échantillonnage, chaque amplificateur transimpédance ayant une entrée et une sortie reliées par un élément passif,
- comparer la tension de sortie du premier amplificateur transimpédance à une tension de consigne définie à partir de la tension de sortie du second amplificateur transimpédance,
- générer un courant de contre-réaction à l'entrée du premier amplificateur transimpédance lorsque la différence entre la tension de sortie et la tension de consigne atteint une valeur seuil de manière à limiter la tension de sortie du premier amplificateur transimpédance.

## Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :

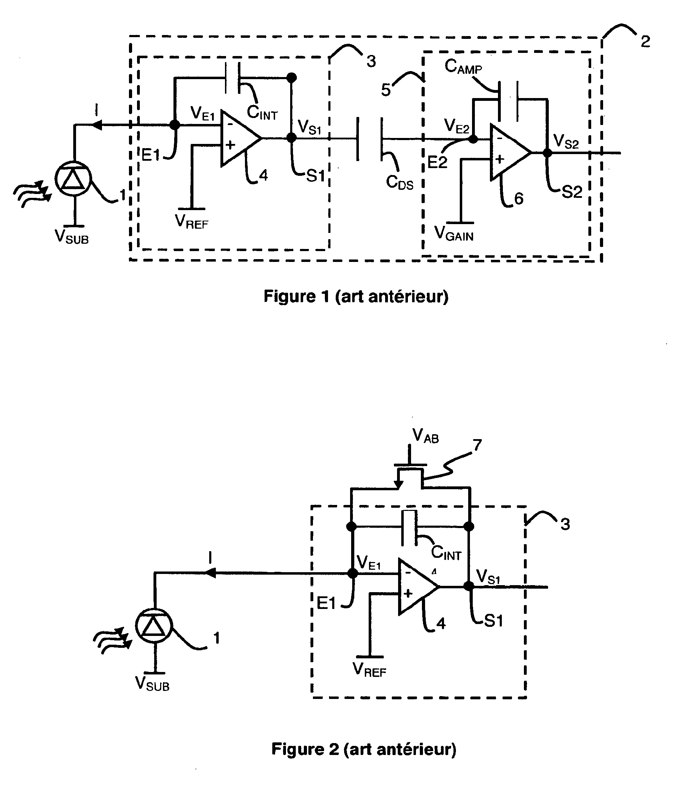

- la figure 1 représente, de manière schématique, un circuit de détection avec un double échantillonnage corrélé selon l'art antérieur,
- la figure 2 représente, de manière schématique, un circuit de détection avec un module d'anti-éblouissement selon l'art antérieur,
- la figure 3 représente, de manière schématique, un premier mode de réalisation d'un circuit de détection avec un double échantillonnage corrélé et un module d'anti-éblouissement,
- les figures 4 et 5 représentent, de manière schématique, des modes plus particuliers de réalisation d'un circuit de détection avec un double échantillonnage corrélé et un module d'anti-éblouissement,
- les figures 6A à 6G et 7A à 7G représentent l'évolution de tensions ou de courants pour des éléments caractéristiques des circuits illustrés aux figures 4 et 5,
- la figure 8 représente l'évolution de la tension aux bornes du module d'anti-éblouissement selon le mode de réalisation illustré à la figure 6.

## Description d'un mode de réalisation préférentiel de l'invention

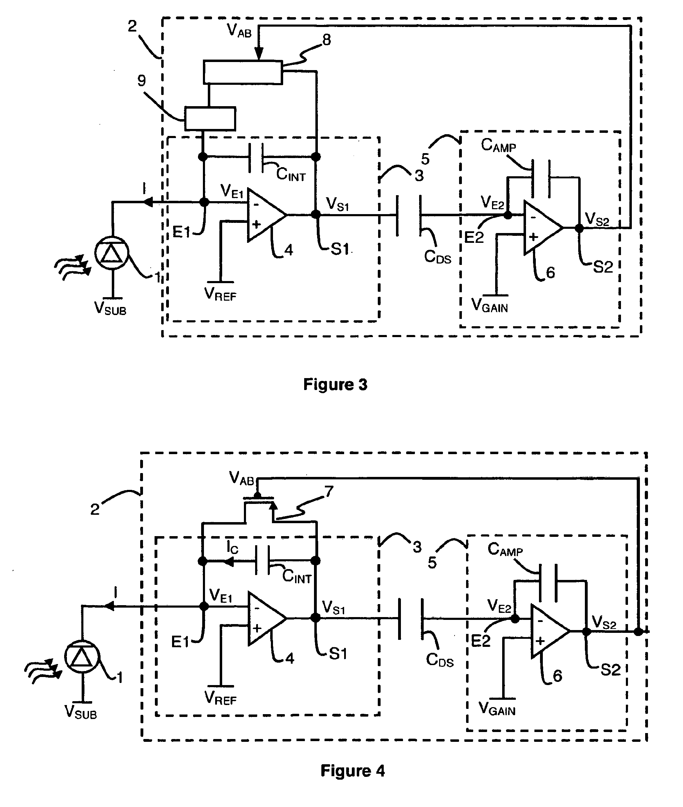

Comme illustré aux figures 3 à 5, le circuit de détection comporte une photodiode 1 qui est connectée à un module de lecture 2.

Dans le circuit de détection illustré aux figures 3 à 5, le module de lecture 2 comporte des premier 3 et second 5 amplificateurs transimpédance. Les amplificateurs transimpédance comportent un amplificateur, typiquement un amplificateur opérationnel, et un élément passif monté en contre réaction, ici un condensateur. Le condensateur est connecté entre la première entrée et la sortie de l'amplificateur.

Le premier amplificateur transimpédance 3 capacitif fait partie ou forme un premier module intégrateur du circuit de détection. Le second amplificateur transimpédance 5 capacitif fait partie ou forme un second module intégrateur du circuit de détection.

Les premier 3 et second 5 amplificateur transimpédance capacitif sont de type opposés. Il y a un amplificateur dont la paire différentielle à l'entrée du circuit est réalisée à partir de transistors nMOS et un amplificateur dont la paire différentielle à l'entrée du circuit est réalisée à partir de transistors pMOS. Cette différenciation des amplificateurs est liée à l'évolution des tensions durant son fonctionnement. De manière classique, lorsque le photodétecteur tire du courant, la paire différentielle est formée par des transistors de type nMOS. Lorsque le photodétecteur injecte du courant, la paire différentielle est formée par des transistors de type pMOS.

Dans le premier amplificateur transimpédance 3 capacitif, un condensateur est monté en contre-réaction d'un premier amplificateur 4 et est appelé condensateur d'intégration $C_{INT}$. Dans le second amplificateur transimpédance 5 capacitif, un condensateur est monté en contre-réaction d'un deuxième amplificateur 6 et est appelé condensateur d'amplification $C_{AMP}$.

Un premier noeud électrique $E_1$ est défini par la connexion de la photodiode 1 avec le condensateur d'intégration $C_{INT}$ et la première entrée du premier amplificateur 4. Un deuxième noeud électrique $S_1$ est défini par la connexion du condensateur d'intégration $C_{INT}$, du condensateur d'échantillonnage $C_{DS}$ et de la sortie du premier amplificateur 4. Le premier noeud électrique $E_1$ représente l'entrée du premier amplificateur transimpédance 3 capacitif et le deuxième noeud électrique $S_1$ représente la sortie du premier amplificateur transimpédance 3 capacitif.

Un troisième noeud électrique $E_2$ est défini par la connexion du condensateur d'échantillonnage $C_{DS}$ avec le condensateur d'amplification $C_{AMP}$ et la première entrée du second amplificateur 6. Un quatrième noeud électrique $S_2$ est défini par la connexion du condensateur d'amplification $C_{AMP}$ et de la sortie du second amplificateur 6. Le troisième noeud électrique $E_2$ représente l'entrée du second amplificateur transimpédance 5 et le quatrième noeud électrique $S_2$ représente la sortie du second amplificateur transimpédance 5.

La photodiode 1 est connectée à l'entrée $E_1$ du premier amplificateur transimpédance 3. Une tension de référence $V_{REF}$ est appliquée sur une seconde entrée du premier amplificateur 4 par des moyens d'application de la tension de référence $V_{REF}$. Le potentiel de la première borne de la photodiode 1, c'est-à-dire le potentiel $V_{E1}$ du premier noeud électrique E1, est imposé par le potentiel appliqué à la seconde entrée de l'amplificateur 4.

Un potentiel de substrat $V_{Sub}$ est appliqué à une seconde borne de la photodiode 1. La photodiode 1 est donc polarisée entre le potentiel de substrat $V_{Sub}$ et le potentiel $V_{E1}$ de l'entrée du premier amplificateur 4, c'est-à-dire entre le potentiel de substrat $V_{SUB}$ et le potentiel de référence $V_{REF}$. La photodiode 1 est polarisée en inverse pour fournir un courant représentatif de l'éclairement de la scène observée, les potentiels de substrat $V_{Sub}$ et de la première entrée $V_{E1}$ du premier amplificateur 4 sont choisis en conséquence.

La borne de sortie $S_1$ du premier amplificateur transimpédance 3 est reliée à une des bornes du condensateur d'échantillonnage $C_{DS}$. L'autre borne du condensateur d'échantillonnage $C_{DS}$ est reliée à une première borne d'entrée $E_2$ du second amplificateur transimpédance 5. Ainsi, les premier 3 et second 5 amplificateurs transimpédance sont reliés par l'intermédiaire du condensateur d'échantillonnage $C_{DS}$.

Une tension de gain $V_{GAIN}$ est appliquée sur une seconde entrée du second amplificateur transimpédance 5 par des moyens d'application de la tension de gain $V_{GAIN}$. Le potentiel de la seconde borne du condensateur d'échantillonnage $C_{DS}$, c'est-à-dire le potentiel $V_{E2}$ du troisième noeud électrique E2, est imposé par le potentiel appliqué à la seconde entrée de l'amplificateur 6. Le condensateur d'échantillonnage $C_{DS}$ est polarisé entre $V_{S1}$ et $V_{E2}$ donc entre $V_{REF}$ et $V_{GAIN}$ lorsque les condensateurs sont déchargés.

Le circuit de détection comporte également un circuit d'anti-éblouissement connecté entre l'entrée $E_1$ et la sortie $S_1$ du premier amplificateur transimpédance 3. Le circuit d'anti-éblouissement est donc connecté aux bornes du condensateur d'intégration $C_{INT}$.

De manière générale, le circuit d'anti-éblouissement comporte des moyens 8 de comparaison de la tension de sortie $V_{S1}$ du premier amplificateur transimpédance 3 avec une tension de consigne $V_{AB}$. Il comporte également des moyens 9 d'application d'un courant de contre-réaction sur la première entrée $E_1$ du premier amplificateur transimpédance 3 lorsque la différence entre la tension de sortie $V_{S1}$ du premier amplificateur 4 et la tension de consigne $V_{AB}$ atteint un seuil, c'est-à-dire une valeur limite ne pouvant être dépassée.

Comme illustré à la figure 3, le circuit d'anti-éblouissement peut comporter une borne de polarisation qui permet de définir la tension de consigne $V_{AB}$. Cette borne de polarisation est distincte des bornes d'entrée du premier amplificateur 3. La tension de consigne $V_{AB}$ est définie au moyen de la tension délivrée en sortie $S_2$ du second amplificateur transimpédance 5. Dans un mode de réalisation préférentiel, la tension de consigne $V_{AB}$ correspond à la tension $V_{S2}$ délivrée par la borne de sortie $S_2$ du second amplificateur transimpédance 5. Comme la tension de consigne $V_{AB}$ est définie au moyen de la tension de sortie $V_{S2}$ du second amplificateur transimpédance 5, le circuit de détection réalise la comparaison de la tension de sortie $V_{S1}$ du premier amplificateur 3 avec la tension de sortie $V_{S2}$ du second amplificateur 5.

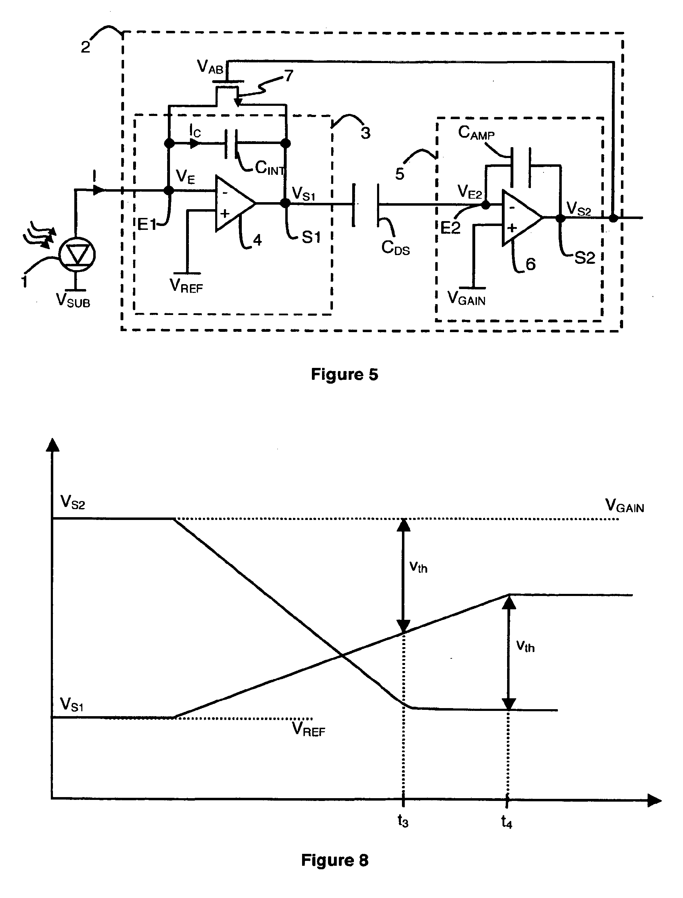

Dans un mode de réalisation particulièrement avantageux, illustré aux figures 4 et 5, le circuit d'anti-éblouissement comporte un transistor 7 à effet de champ connecté entre l'entrée $E_1$ et la sortie $S_1$ du premier amplificateur transimpédance 3 capacitif. Le transistor 7 est donc connecté, en parallèle, aux bornes du condensateur d'intégration $C_{INT}$. Le transistor 7 est connecté à l'amplificateur 3 en contre-réaction négative. La tension de consigne $V_{AB}$ est appliquée sur l'électrode de grille du transistor 7 à effet de champ. Le potentiel d'anti-éblouissement $V_{AB}$ sert de tension de consigne par rapport au potentiel de sortie $V_{S1}$ et permet de définir quand le transistor 7 est bloqué ou passant.

Comme illustré à la figure 4, dans un premier mode de réalisation particulier, le transistor 7 du circuit d'anti-éblouissement est de type pMOS. Le potentiel de substrat $V_{Sub}$ est appliqué à l'anode de la photodiode 1 alors que la cathode est connectée à l'entrée $E_1$ du premier amplificateur transimpédance 3 capacitif. Le transistor 7 est donc connecté par sa borne de drain à la cathode de la photodiode 1, typiquement au niveau de la première entrée $E_1$ du premier amplificateur transimpédance 3 capacitif. La photodiode 1 étant polarisée en inverse, le potentiel $V_{E1}$ au premier noeud $E_1$ est supérieur au potentiel de substrat $V_{Sub}$.

Dans ce mode de réalisation, l'état passant ou bloqué du transistor 7 de type pMOS est défini par rapport à la différence de potentiel qui existe entre l'électrode de grille et la sortie $S_1$ du premier amplificateur 3. Le potentiel d'anti-éblouissement $V_{AB}$ appliqué sur l'électrode de grille du transistor 7 de type pMOS est comparé avec la sortie $S_1$ de l'amplificateur transimpédance 3 capacitif et non plus avec la première entrée comme dans le cas du transistor nMOS de l'art antérieur.

De cette manière, une seule condition est nécessaire pour éviter le phénomène d'éblouissement. Il suffit que le transistor 7 devienne passant lorsque la valeur du potentiel sur la sortie de l'amplificateur 3 atteint une valeur limite, une valeur maximale de sortie $V_{Smax}$. Cette condition est représentée à l'équation 1 pour un transistor pMOS.

$$V_{AB} < V_{S\,max} - |V_{th}| \quad (1)$$

Lorsque la différence entre la tension de sortie $V_{S1}$ et la tension de consigne $V_{AB}$ atteint une valeur seuil, un courant de contre-réaction est généré à l'entrée $E_1$ du premier amplificateur transimpédance 3 de manière à limiter la tension de sortie $V_{S1}$ du premier amplificateur transimpédance 3. Le courant de contre-réaction correspond à une évacuation des charges excédentaires aux bornes du condensateur d'intégration $C_{INT}$.

Le transistor 7 est bloqué tant que le potentiel $V_{AB}$ appliqué sur l'électrode de grille du transistor 7 est supérieur au potentiel de sortie $V_{S1}$ du premier amplificateur 4 auquel on soustrait la valeur absolue de la tension de seuil $V_{th}$ du transistor 7. En d'autres termes, le transistor 7 est bloqué tant que la différence entre la tension de consigne $V_{AB}$ et le potentiel de sortie $V_{S1}$ est inférieure à la tension de seuil du transistor 7 comme cela est représenté à l'équation 1.

Dans le circuit de détection, le courant émis par la photodiode 1 est stocké par le condensateur d'intégration $C_{INT}$ ce qui se traduit par l'apparition d'une différence de potentiel aux bornes du condensateur $C_{INT}$. L'évolution de la différence de potentiel aux bornes du condensateur $C_{INT}$ entraîne une évolution de la tension $V_{S1}$ qui elle-même entraîne une évolution de la tension $V_{S2}$.

Lorsque la tension de sortie $V_{S2}$ du second amplificateur transimpédance 5 évolue, il y a évolution de la tension de consigne $V_{AB}$ jusqu'à ce que ce que la différence entre la valeur de consigne $V_{AB}$ et la tension en sortie du premier amplificateur arrive à un seuil. A ce moment, le transistor 7 devient passant et il y a création d'un courant de contre-réaction qui empêche les potentiels d'entrée $V_{E1}$ et de sortie $V_{S1}$ du premier amplificateur 3 de dépasser les valeurs seuils. Ainsi, il y a évolution en continue des potentiels appliqués sur la source et la grille du transistor 7 jusqu'à ce que la différence de potentiel entre la source et la grille entraîne le basculement du transistor 7 dans un état passant.

La tension de sortie $V_{S1}$ du premier amplificateur et la tension de sortie $V_{S2}$ du second amplificateur évoluent jusqu'à atteindre leur valeur limite. Ces deux valeurs limites correspondent au moment où le module d'anti-éblouissement se déclenche, c'est-à-dire au moment où la différence de potentiel entre la grille et la source est égale à la tension de seuil du transistor 7.

Dans le cas où la sortie du second amplificateur transimpédance 5 est directement connectée au moyen de comparaison 8, ici à la grille du transistor 7, il y a une comparaison directe entre le potentiel $V_{S2}$ et le potentiel $V_{S1}$.

Dans le cas où le module d'anti-éblouissement comporte un transistor à effet de champ pMOS connecté en parallèle aux bornes du condensateur d'intégration, le transistor est dans un état bloqué tant que le potentiel $V_{S2}$ en sortie du second amplificateur transimpédance 5 est supérieur au potentiel $V_{S1}$ en sortie du premier amplificateur transimpédance moins la valeur absolue de la tension de seuil. Il n'y a pas de passage de courant. Le courant délivré par le photodétecteur 1 charge le condensateur d'intégration $C_{INT}$ sans qu'une partie du courant soit dérivée par le transistor 7.

De manière générale, si le module d'anti-éblouissement comporte un transistor à effet de champ connecté en parallèle aux bornes du condensateur d'intégration $C_{INT}$, on réalise la comparaison de la différence de potentiel entre la grille et la source par rapport à la tension de seuil pour passer le transistor à l'état passant.

Dans la mesure où la tension de sortie $V_{S1}$ évolue entre la tension de référence $V_{REF}$ et la tension de saturation de l'amplificateur 4, il suffit de définir une tension de sortie maximale $V_{Smax}$ accessible qui soit comprise entre ces deux tensions, de préférence une tension de sortie maximale proche de la tension de saturation de l'amplificateur pour avoir une dynamique importante.

De cette manière, le transistor 7 devient passant quand la tension en sortie $V_{S1}$ est égale à la tension maximale $V_{S1max}$ autorisée, c'est-à-dire à une tension proche de la tension de saturation. On évite ainsi la dépolarisation de la photodiode 1 et la saturation de l'amplificateur. Comme le basculement du transistor 7 de l'état bloqué à l'état passant est réalisé par rapport à la tension de sortie $V_{S1}$, il y a toujours des charges accumulées dans le condensateur d'intégration $C_{INT}$ lorsque le transistor 7 change de l'état bloqué à l'état passant.

Un ajustement similaire est réalisé sur la tension $V_{S2}$ en sortie du second amplificateur 6. De cette manière, le dispositif profite de la plus grande dynamique possible sur les tensions $V_{S1}$ et $V_{S2}$ avant que la différence entre les tensions $V_{S2}$ et $V_{S1}$, n'entraîne le basculement à l'état passant du transistor 7. Les valeurs des potentiels de référence $V_{REF}$, de gain $V_{GAIN}$ et des condensateurs $C_{INT}$, $C_{DS}$ et $C_{AMP}$ sont choisies pour ajuster les conditions de fonctionnement et en fonction d'autres besoins du circuit.

Plus la tension de sortie maximale $V_{S1max}$ est proche de la tension de saturation et plus la quantité de charges accumulées dans le condensateur d'intégration $C_{INT}$ avant le basculement est importante. Ainsi, avec une tension de sortie maximale sensiblement égale à la tension de saturation, on profite de la plus grande dynamique possible dans l'utilisation du condensateur d'intégration $C_{INT}$. Avantageusement, la tension de sortie $V_{S2MIN}$ est choisi proche de la tension de saturation au moyen du condensateur d'amplification $C_{AMP}$.

Le passage du transistor 7 de l'état bloqué à l'état passant étant défini par rapport à la tension de sortie, la criticité des variations de tension de seuil $V_{th}$ qui sont liées au procédé de fabrication est amoindrie. Il suffit que le transistor 7 bascule dans un état passant, au plus tard, lorsque la tension de sortie $V_{S1}$ atteint la tension de saturation de l'amplificateur.

Le basculement du transistor 7 entre l'état passant et l'état bloqué est également fonction de la tension de sortie $V_{S2}$ du second amplificateur transimpédance 5. Le basculement du transistor 7 entre l'état passant et l'état bloqué est donc fonction de la valeur du condensateur d'échantillonnage $C_{DS}$, de la valeur du condensateur d'amplification $C_{AMP}$ et du potentiel de gain $V_{GAIN}$. Les valeurs de ces différents paramètres sont donc choisies de manière à obtenir de préférence le basculement du transistor 7 avant que les tensions de sortie $V_{S1}$ et $V_{S2}$ n'atteignent leur valeur de saturation. La différence entre la tension de référence $V_{REF}$ et la tension de gain $V_{GAIN}$ est telle qu'en l'absence de charge dans le condensateur d'intégration, le transistor 7 est à l'état de commutateur ouvert.

La sensibilité de l'évolution de la tension $V_{S2}$ en fonction de la charge du condensateur d'intégration $C_{INT}$ est liée aux valeurs des condensateurs $C_{INT}$, $C_{DS}$ et $C_{AMP}$.

De préférence, la différence entre la tension $V_{REF}$ et la tension $V_{GAIN}$ est au moins égale à la tension de seuil moyenne des transistors entrant en jeu dans la structure. Ceci permet d'accroître la dynamique de fonctionnement du dispositif pour éviter la saturation du deuxième amplificateur 6. La tension de seuil du transistor 7 est représentative des tensions de seuil des transistors utilisés dans les amplificateurs 4 et 6. Au fur et à mesure de la charge du condensateur d'intégration $C_{INT}$, les potentiels de sortie $V_{S1}$ et $V_{S2}$ évoluent de manière opposée, c'est-à-dire que $V_{S2}$ diminue lorsque $V_{S1}$ augmente et inversement.

Avantageusement, quand la cathode du photodétecteur 1 est connectée au premier amplificateur 4, le potentiel de gain $V_{GAIN}$ est supérieur au potentiel de référence $V_{REF}$. Quand l'anode du photodétecteur 1 est connectée au premier amplificateur 4, le potentiel de référence $V_{REF}$ est supérieur au potentiel de gain $V_{GAIN}$.

Dans un autre mode de réalisation illustré à la figure 5, le circuit de détection comporte un montage opposé à celui de la figure 4. La photodiode est montée dans l'autre sens, le transistor 7 est maintenant un transistor de type nMOS et la répartition des potentiels a été inversée. Les moyens de comparaison 8 sont connectés à l'anode de la photodiode. Pour un transistor nMOS, le transistor est dans un état bloqué tant que la différence entre le potentiel appliqué sur la grille (le potentiel de consigne $V_{AB}$) et le potentiel de source (le potentiel provenant de la sortie du second amplificateur 6) est supérieure à la tension de seuil du transistor.

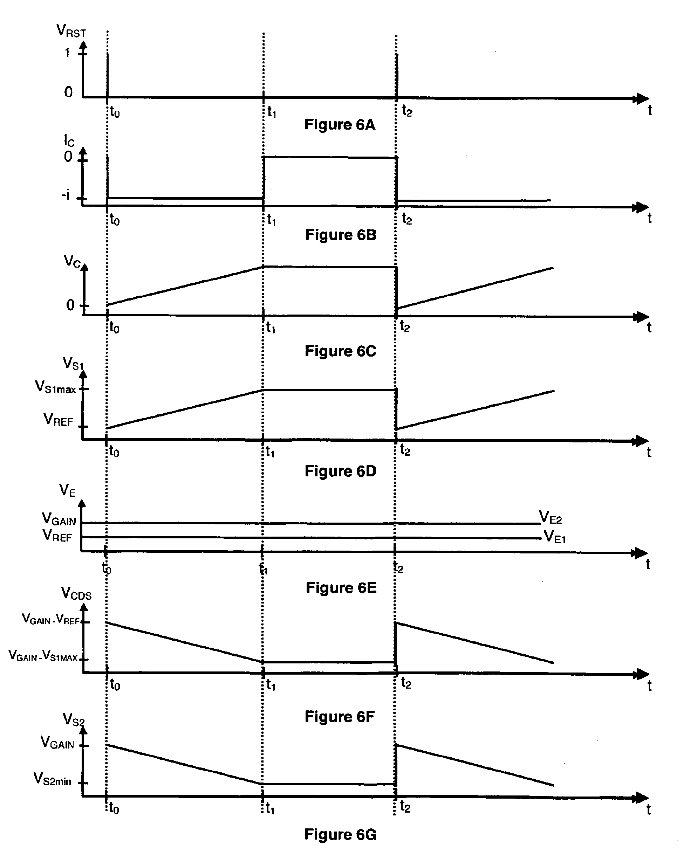

Le fonctionnement du circuit illustré aux figures 3 et 4 peut être décrit schématiquement de la manière suivante sur les figures 6A à 6G. A un temps $t_0$, un circuit de remise à zéro réalise le court-circuit des bornes du condensateur d'intégration $C_{INT}$ qui devient donc déchargé. La figure 6A illustre le fonctionnement du circuit de remise à zéro de manière logique. La remise à zéro du condensateur d'intégration $C_{INT}$ est réalisée au moyen d'une impulsion (durée à l'état haut 1) à une tension de remise à zéro. Il en est de même avec le condensateur d'amplification $C_{AMP}$.

A titre d'exemple, la tension de remise à zéro $V_{RST}$ est appliquée à un second transistor (non représenté) qui est connecté en parallèle aux bornes du condensateur d'intégration $C_{INT}$ qui devient alors passant. La différence de potentiels $V_{CINT}$ aux bornes du condensateur d'intégration $C_{INT}$ est alors nulle (figure 6C). La photodiode 1 est polarisée en inverse entre la tension de substrat $V_{Sub}$ (appliquée à l'anode sur les figures 3 et 4) et le potentiel $V_{E1}$ de la première entrée $E_1$ du premier amplificateur transimpédance 3 capacitif, typiquement la tension de référence $V_{REF}$ appliquée sur la seconde entrée du premier amplificateur 4 (Figure 6E).

Au temps $t_0$, le potentiel $V_{E1}$ de la première entrée du premier amplificateur transimpédance 3 capacitif est donc égal au potentiel de référence $V_{REF}$ (figure 6E) et la photodiode 1 est polarisée entre $V_{REF}$ et $V_{Sub}$, c'est-à-dire à la tension $V_{REF}$-$V_{Sub}$. Le potentiel $V_{S1}$ en sortie du premier amplificateur transimpédance capacitif est égal à $V_{REF}$ (figure 6D). Le potentiel $V_{S1}$ est appliqué sur une des bornes du condensateur d'échantillonnage $C_{DS}$, ici le potentiel $V_{REF}$.

Le potentiel d'entrée $V_{E2}$ du second amplificateur 6 est appliqué sur la seconde borne du condensateur d'échantillonnage $C_{DS}$. Le potentiel d'entrée $V_{E2}$ correspond au potentiel de gain $V_{GAIN}$ qui est appliqué sur la deuxième borne d'entrée du second amplificateur 6 (figure 6E). Le condensateur d'échantillonnage $C_{DS}$ est polarisé entre $V_{GAIN}$ et $V_{REF}$ (figure 6F). Le condensateur d'amplification $C_{AMP}$ est déchargé et le second amplificateur transimpédance 5 capacitif présente en sortie le potentiel de gain $V_{GAIN}$.

Si la sortie du second amplificateur transimpédance 6 est connectée directement à la grille du transistor 7, ce dernier compare les deux tensions de sortie des amplificateurs transimpédance. La tension de gain $V_{GAIN}$ étant ici plus importante que la tension de référence $V_{REF}$, le transistor 7 est dans un état bloqué. Dans une variante de réalisation, un potentiel représentatif de potentiel de sortie $V_{S2}$ est appliqué sur l'électrode de grille du transistor 7 ce qui modifie légèrement la valeur de la comparaison, le résultat étant identique.

Entre le temps $t_0$ et le temps $t_1$, la photodiode 1 délivre un courant I représentatif de la scène observée, ici de manière schématique un courant constant. Les charges composant ce courant sont stockées dans le condensateur d'intégration $C_{INT}$ et entraînent une différence de potentiel $V_{CINT}$ aux bornes du condensateur d'intégration $C_{INT}$. Cette différence de potentiel augmente au fur et à mesure de la charge du condensateur d'intégration $C_{INT}$. La tension $V_{S1}$ et la tension aux bornes de $C_{INT}$ augmentent au fur et à mesure de la charge du condensateur $C_{INT}$ comme cela est illustré aux figures 6C et 6D.

Dans son fonctionnement normal, le premier amplificateur transimpédance 3 force le potentiel $V_{E1}$ de la première entrée à être égal au potentiel de la deuxième entrée, ici le potentiel de référence $V_{REF}$. Entre les instants $t_0$ et $t_1$, le potentiel $V_{E1}$ de la première entrée et donc la différence de potentiel aux bornes de la photodiode 1 sont constants. Il en résulte une évolution du potentiel $V_{S1}$ de sortie du premier amplificateur transimpédance capacitif, la tension de sortie $V_{S1}$ augmente au fur et à mesure de la charge du condensateur d'intégration $C_{INT}$ à partir de la tension de référence $V_{REF}$.

Seule, la tension de sortie $V_{S1}$ évolue. La tension $V_{S1}$ évolue avec la charge du condensateur $C_{INT}$ et la tension sur l'autre borne du condensateur d'échantillonnage $C_{DS}$ est fixée par le second amplificateur 6 à la tension de gain $V_{GAIN}$. Comme la tension de Gain $V_{GAIN}$ est supérieure à la tension de référence $V_{REF}$, il y a diminution de la différence de potentiel aux bornes du condensateur d'échantillonnage $C_{DS}$ au fur et à mesure de la charge du condensateur d'intégration $C_{INT}$.

Au fur et à mesure que la tension de sortie $V_{S1}$ du premier amplificateur augmente, la différence de potentiel aux bornes du condensateur d'échantillonnage $C_{DS}$ et aux bornes du condensateur d'amplification $C_{AMP}$ évoluent (figures 6F et 6G). Il en résulte une diminution de la tension de sortie $V_{S2}$ du second amplificateur transimpédance 5 à partir de la tension de gain $V_{GAIN}$ et donc une diminution de la tension appliquée sur la grille du transistor 7. Les tensions de sortie $V_{S1}$ et $V_{S2}$ des deux amplificateurs transimpédance évoluent dans des sens opposés. Malgré l'évolution de la tension $V_{S2}$, le transistor 7 reste à l'état bloqué. Durant cette période, aucun courant ne passe à travers le transistor 7.

Au temps $t_1$, la différence entre la tension de sortie $V_{S2}$ du second module intégrateur et la tension $V_{S1}$ du premier module intégrateur atteint une valeur limite (ici la tension de seuil du transistor 7) qui entraîne l'apparition d'un courant de contre-réaction entre l'entrée $E_1$ et la sortie $S_1$ du premier amplificateur. Au temps $t_1$, le transistor 7 devient passant ce qui permet le passage du courant de contre-réaction ou l'évacuation des charges excédentaires.

La tension $V_{S1}$ en sortie du premier amplificateur transimpédance 3 atteint la valeur maximale $V_{S1max}$. La tension en sortie $V_{S2}$ du second amplificateur transimpédance 5 atteint la valeur minimale $V_{S2min}$. Le transistor 7 devient passant car la tension de sortie $V_{S2}$ du second amplificateur transimpédance 5 est égale à la tension de sortie $V_{S1}$ du premier amplificateur transimpédance 3 avec la tension de seuil $V_{th}$ du transistor 7 (tension négative dans le cas d'un pMOS), soit lorsque $V_{S1MAX} = V_{S2MIN} + |V_{th}|$.

A partir de ce moment, le transistor 7 est passant et le courant circule maintenant depuis la photodiode 1 à travers le transistor 7. Les charges supplémentaires, envoyées par la photodiode 1, ne sont pas stockées par le condensateur d'intégration $C_{INT}$. La différence de potentiels aux bornes des condensateurs $C_{INT}$ et $C_{AMP}$ est donc constante à partir de $t_1$. Le courant de la photodiode 1 correspond à la somme du courant passant à travers le transistor 7 et du courant du condensateur d'intégration $C_{INT}$.

Le transistor 7 se déclenche avant que la tension de sortie $V_{S1}$ du premier amplificateur 3 et avantageusement avant que la tension de sortie $V_{S2}$ du second amplificateur 5 n'atteignent leur tension de saturation (figures 6D et 6G), c'est-à-dire la valeur maximale ou minimale que peut délivrer l'amplificateur sur sa sortie.

Ainsi, dès que le transistor 7 devient passant, il n'y a pas d'évolution de $V_{S1}$ ce qui empêche toute évolution du potentiel $V_{E1}$ de la première entrée de l'amplificateur 3 (figure 6E) et la dépolarisation de la photodiode 1 est évitée.

Le condensateur d'intégration $C_{INT}$ est ensuite déchargé à la fin de la période de mesure à l'instant $t_2$, au moyen du circuit de remise à zéro. Le circuit retrouve alors les conditions de l'instant $t_0$. Il en est de même pour le condensateur d'amplification.

Comme illustré à la figure 5, dans un second mode de réalisation, le transistor 7 du circuit d'anti-éblouissement est un transistor de type nMOS connecté à l'anode de la photodiode 1 par l'intermédiaire de la première entrée de l'amplificateur transimpédance capacitif. Par rapport au mode de réalisation précédent, les polarisations et les types de conductivité des transistors et des photodétecteurs sont inversés.

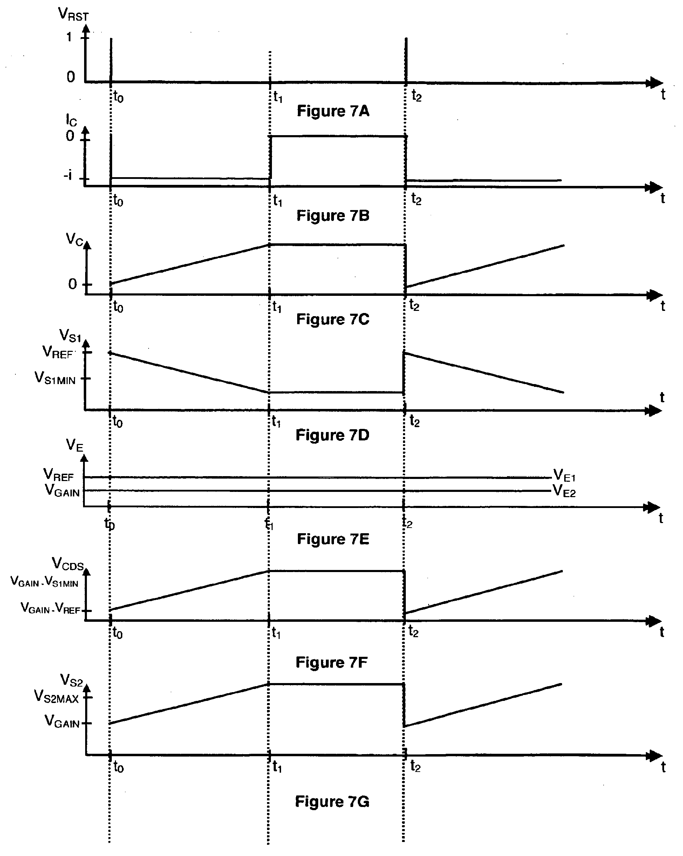

L'évolution des potentiels et des courants circulant dans le circuit est représentée sur les figures 7A à 7G qui correspondent sensiblement aux figure 6A à 6G en sens opposé.

Dans ce mode de réalisation particulier, la tension de sortie $V_{S1}$ du premier amplificateur 4 évolue depuis la tension de référence $V_{REF}$ qui est imposée sur la seconde entrée de l'amplificateur 4 vers le potentiel de sortie minimal $V_{S1MIN}$ (figure 7D). Dans ce mode de réalisation, la tension de sortie $V_{S1}$ diminue avec la charge du condensateur d'intégration $C_{INT}$ (figure 7D). La tension de sortie $V_{S2}$ du second amplificateur transimpédance 5 augmente avec la charge du condensateur d'amplification $C_{AMP}$ pour atteindre le potentiel de sortie minimal $V_{S2MAX}$ (figure 7G). Le potentiel de gain $V_{GAIN}$ est inférieur au potentiel de référence $V_{REF}$ (figure 7E). La différence de potentiel aux bornes du condensateur d'échantillonnage $C_{DS}$ augmente au fur et à mesure de la charge du condensateur d'intégration $C_{INT}$.

De manière générale, la photodiode 1 délivre un courant représentatif de la scène observée sur l'entrée E1 du premier amplificateur transimpédance 3. Ce courant sur l'entrée E1 se traduit par l'apparition d'une différence de potentiel entre les bornes d'entrée $V_{E1}$ et de sortie $V_{S1}$ du premier amplificateur transimpédance 3 car ces deux bornes sont reliées par un élément passif comme une capacité. Cette différence de potentiel aux bornes de l'élément passif se répercute par l'apparition d'une différence de potentiel aux bornes de l'élément passif équivalent du second amplificateur transimpédance 6. Il y a donc une évolution du potentiel de sortie de chaque amplificateur et la différence entre ces deux potentiels est utilisée pour déclencher le module d'anti-éblouissement.

La tension de sortie $V_{S2}$ du second amplificateur 6 évolue avec la charge du condensateur d'amplification $C_{AMP}$. La tension de sortie $V_{S1}$ est comparée à une tension de consigne $V_{AB}$ (provenant de la tension $V_{S2}$) à travers les moyens 8 de comparaison. Lorsque la différence entre la tension de sortie $V_{S1}$ et la tension de consigne $V_{AB}$ (ou l'inverse selon le mode de réalisation) atteint une valeur seuil, un courant de contre-réaction est généré à l'entrée $E_1$ de l'amplificateur transimpédance 3. Ce courant de contre-réaction empêche l'augmentation de la différence de potentiel entre les bornes d'entrée $E_1$ et de sortie $S_1$ de l'amplificateur transimpédance 3.

Le fait que la tension de consigne $V_{AB}$ soit définie au moyen de la tension de sortie $V_{S2}$ du second amplificateur transimpédance 5 évite l'introduction d'une ligne de polarisation supplémentaire. De cette manière, le circuit de détection est particulièrement compact. De plus, si la tension de consigne $V_{AB}$ correspond à la tension de sortie du second amplificateur transimpédance 6, la compacité du circuit est accrue.

Le cas où le circuit d'anti-éblouissement comporte un transistor connecté entre la première entrée et la sortie de l'amplificateur transimpédance capacitif est particulièrement avantageux, cela permet d'obtenir un circuit qui est compact. Le reste du circuit peut être déporté dans une zone où la densité d'intégration est un paramètre moins critique.

Dans un mode de réalisation particulièrement avantageux, le condensateur d'échantillonnage $C_{DS}$ est réalisé au moyen d'un condensateur ayant une capacité variable selon la polarisation appliquée à ses bornes. Cette modulation de la capacité électrique permet de régler la sensibilité de déclenchement du module d'anti-éblouissement.

De manière avantageuse, le condensateur d'échantillonnage est de type Metal-Oxyde-Semiconducteur. De manière encore plus avantageuse, le condensateur d'échantillonnage est un condensateur nMOS lorsque le circuit d'anti-éblouissement est connecté à la cathode du photodétecteur c'est-à-dire dans un cas particulier lorsque le transistor 7 du circuit d'anti-éblouissement est de type pMOS selon les modes de réalisation illustrés aux figures 3 à 5. Dans les modes de réalisation des figures 3 et 4, si le condensateur $C_{DS}$ est de type nMOS, l'électrode de grille est connectée au deuxième amplificateur 6 et l'électrode de substrat est connectée à la sortie du premier amplificateur. Si le condensateur $C_{DS}$ est de type pMOS, les branchements sont inversés, l'électrode de grille est connectée à la sortie du premier amplificateur et l'électrode de substrat est connectée au deuxième amplificateur 6. Dans le mode de réalisation de la figure 5, si le condensateur $C_{DS}$ est de type nMOS, l'électrode de grille est connectée à la sortie du premier amplificateur et l'électrode de substrat est connectée au deuxième amplificateur 6. Les branchements sont inversés si le condensateur $C_{DS}$ est de type pMOS.

La sortie $S_1$ du premier amplificateur 4 est connectée à la grille du condensateur MOS et l'entrée $E_2$ du second amplificateur 6 est connectée au substrat du condensateur MOS avec un semi-conducteur dopé de type p.

Lorsque le condensateur d'échantillonnage $C_{DS}$ est de type Métal-Oxyde-Semi-conducteur, la valeur de capacité évolue en fonction de la différence de potentiel appliquée à ses bornes. Cependant dans une capacité de type MOS, cette évolution a lieu jusqu'à ce que la différence entre l'électrode de grille et le substrat soit égale à la tension de seuil du transistor. Une fois cette valeur atteinte, la valeur de capacité électrique n'évolue plus.

Au fur et à mesure de l'évolution de la capacité électrique du condensateur d'échantillonnage $C_{DS}$, il y a évolution de la différence de potentiel aux bornes du condensateur d'amplification $C_{AMP}$ et de la tension de sortie $V_{S2}$.

De cette manière, avec un condensateur d'échantillonnage de type MOS, à partir d'un seuil, la vitesse d'évolution de la tension de sortie $V_{S2}$ en fonction de la charge du condensateur d'intégration $C_{INT}$ change. Ce mode de réalisation permet d'avoir un déclenchement plus souple du module d'anti-éblouissement en réduisant la vitesse d'évolution de la différence de potentiel entre $V_{S1}$ et $V_{S2}$ en fonction de la charge du condensateur d'intégration $C_{INT}$. L'évolution de la valeur de capacité a lieu durant le passage du régime d'accumulation au régime d'inversion.

Comme cela est illustré à la figure 8, à l'instant

$t_3$, lorsque la différence de potentiel aux bornes du condensateur d'échantillonnage $C_{DS}$, c'est-à-dire la différence entre $V_{GAIN}$ et $V_{S1}$, est égale à la tension de seuil du condensateur, la capacité s'annule et donc le gain du deuxième amplificateur 6 (lié au rapport entre $C_{DS}$ et $C_{AMP}$) tend à s'annuler. La tension $V_{S2}$ n'évolue plus et elle demeure constante à la valeur de $V_{S2}$ présente lorsque la capacité $C_{DS}$ s'est annulée. Comme la valeur de la tension $V_{S1}$ continue d'évoluer, la différence de potentiel entre $V_{S1}$ et $V_{S2}$ continue d'augmenter jusqu'à atteindre la tension de seuil $v_{th}$ du transistor 7 à l'instant $t_4$.

Un fonctionnement semblable peut être obtenu dans le mode de réalisation illustré à la figure 5 dans lequel le condensateur d'échantillonnage est de type pMOS, c'est-à-dire avec un semi-conducteur dopé de type n.

La fréquence de fonctionnement est de préférence inférieure à 50MHz.

## Revendications

1. Circuit de détection avec double échantillonnage corrélé comportant :

    - un premier amplificateur transimpédance (3) capacitif,
    - une photodiode (1) connectée à une entrée (E1) du premier amplificateur transimpédance (3),
    - un second amplificateur transimpédance (5) capacitif,
    - un condensateur d'échantillonnage ($C_{DS}$) connecté entre une sortie (S1) du premier amplificateur transimpédance (3) et une entrée (E2) du second amplificateur transimpédance (5),

    **caractérisé en ce qu'**il comprend un circuit d'anti-éblouissement (7, 8, 9) connecté entre l'entrée (E1) et la sortie (S1) du premier amplificateur transimpédance (3), le circuit d'anti-éblouissement (7, 8, 9) comportant :

    - des moyens de comparaison (7, 8) de la tension en sortie ($V_{S1}$) du premier amplificateur transimpédance (3) à une tension de consigne ($V_{AB}$) définie à partir de la tension de sortie ($V_{S2}$) du second amplificateur transimpédance (5), et
    - des moyens d'application (5, 9) d'un courant de contre-réaction à l'entrée (E1) du premier amplificateur transimpédance (3) de manière à limiter la tension de sortie ($V_{S1}$) du premier amplificateur transimpédance (3) lorsque la différence entre la tension de sortie ($V_{S1}$) et la tension de consigne ($V_{AB}$) atteint une valeur limite.

2. Circuit selon la revendication 1, **caractérisé en ce que** le condensateur d'échantillonnage ($C_{DS}$) présente une capacité variable en fonction de la différence de potentiel présente entre la sortie (S1) du premier amplificateur transimpédance (3) et l'entrée (E2) du second amplificateur transimpédance (6).

3. Circuit selon la revendication 2 dans lequel le condensateur d'échantillonnage ($C_{DS}$) est réalisé à partir d'un condensateur de type MOS.

4. Circuit selon l'une quelconque des revendications 1 à 3, dans lequel le circuit d'anti-éblouissement (5) comporte :

    - un transistor MOS (5) de type p avec une première borne connectée à l'entrée du premier amplificateur transimpédance (3) et connectée à une cathode de la photodiode (1) et une seconde borne connectée à la sortie du premier amplificateur transimpédance (3),
    - un moyen d'application de la tension de consigne ($V_{AB}$) sur une électrode de commande du transistor (5),
    - des moyens d'application d'une tension de référence au premier amplificateur (3) et d'une tension de gain au second amplificateur (6), la tension de référence ($V_{REF}$) étant inférieure à la tension de gain ($V_{GAIN}$).

5. Circuit selon l'une quelconque des revendications 1 à 3, dans lequel le circuit d'anti-éblouissement (5) comporte :

    - un transistor MOS (5) de type n avec une première borne connectée à l'entrée du premier amplificateur transimpédance (3) et connectée à une anode de la photodiode (1) et une seconde borne connectée à la sortie du premier amplificateur transimpédance (3),
    - un moyen d'application de la tension de consigne ($V_{AB}$) sur une électrode de commande du transistor (5)
    - des moyens d'application d'une tension de référence au premier amplificateur (3) et d'une tension de gain au second amplificateur (6), la tension de référence ($V_{REF}$) étant supérieure à la tension de gain ($V_{GAIN}$).

6. Circuit selon l'une quelconque des revendications 1 à 5, **caractérisé en ce que** la tenson de consigne ($V_{AB}$) est égale à la tension de sortie ($V_{S2}$) du second amplificateur transimpédance (6).

7. Procédé de lecture d'un circuit de détection, **caractérisé en ce qu'**il comporte les étapes suivantes :

    - générer un courant à partir d'une photodiode (1) polarisée en inverse vers une entrée (E1) d'un premier amplificateur transimpédance (3), une sortie (S1) du premier amplificateur transimpédance étant connectée à une entrée (E2) d'un second amplificateur transimpédance (5) par un condensateur d'échantillonnage ($C_{DS}$), chaque amplificateur transimpédance (3, 5) ayant une entrée et une sortie reliées par un élément passif,

- comparer la tension de sortie ($V_{S1}$) du premier amplificateur transimpédance (3) à une tension de consigne ($V_{AB}$) définie à partir de la tension de sortie ($V_{S2}$) du second amplificateur transimpédance (5),

- générer un courant de contre-réaction à l'entrée (E1) du premier amplificateur transimpédance (3) lorsque la différence entre la tension de sortie ($V_{S1}$) et la tension de consigne ($V_{AB}$) atteint une valeur seuil de manière à limiter la tension de sortie ($V_{S1}$) du premier amplificateur transimpédance (3).

**8.** Procédé selon la revendication 7, **caractérisé en ce que** la génération du courant de contre-réaction provient de la mise à l'état passant d'un transistor (7) reliant l'entrée (E1) à la sortie (S1) du premier amplificateur opérationnel (3).

**Patentansprüche**

**1.** Detektionsschaltung mit korrelierter Doppelabtastung, umfassend:

- einen ersten kapazitiven Transimpedanzverstärker (3),
- eine Fotodiode (1), die an einen Eingang (E1) des ersten Transimpedanzverstärkers (3) angeschlossen ist,
- einen zweiten kapazitiven Transimpedanzverstärker (5),
- einen Abtastkondensator ($C_{DS}$), der zwischen einem Ausgang (S1) des ersten Transimpedanzverstärkers (3) und einem Eingang (E2) des zweiten Transimpedanzverstärkers (5) angeschlossen ist,

**dadurch gekennzeichnet, dass** sie eine Blendschutzschaltung (7, 8, 9) umfasst, die zwischen dem Eingang (E1) und dem Ausgang (S1) des ersten Transimpedanzverstärkers (3) angeschlossen ist, wobei die Blandschutzschaltung (7, 8, 9) umfasst:

- Mittel zum Vergleichen (7, 8) der Ausgangsspannung (VS1) des ersten Transimpedanzverstärkers (3) mit einer Sollspannung (VAB), die anhand der Ausgangsspannung (VS2) des zweiten Transimpedanzverstärkers (5) definiert ist, und
- Mittel zum Anlegen (5, 9) eines Gegenkopplungsstroms an den Eingang (E1) des ersten Transimpedanzverstärkers (3), um die Ausgangsspannung (VS1) des ersten Transimpedanzverstärkers (3) zu begrenzen, wenn die Differenz zwischen der Ausgangsspannung (VS1) und der Sollspannung (VAB) einen Grenzwert erreicht.

**2.** Schaltung nach Anspruch 1, **dadurch gekennzeichnet, dass** der Abtastkondensator (CDS) eine Kapazität aufweist, die in Abhängigkeit von der zwischen dem Ausgang (S1) des ersten Transimpedanzverstärkers (3) und dem Eingang (E2) des zweiten Transimpedanzverstärkers (6) vorliegenden Potentialdifferenz variabel ist.

**3.** Schaltung nach Anspruch 2, wobei der Abtastkondensator ($C_{DS}$) aus einem Kondensator vom Typ MOS ausgebildet ist.

**4.** Schaltung nach einem der Ansprüche 1 bis 3, wobei die Blendschutzschaltung (5) umfasst:

- einen MOS-Transistor (5) vom p-Typ, mit einem ersten Anschluss, der an den Eingang des ersten Transimpedanzverstärkers (3) angeschlossen ist und an eine Kathode der Fotodiode (1) angeschlossen ist, sowie einem zweiten Anschluss, der an den Ausgang des ersten Transimpedanzverstärkers (3) angeschlossen ist,
- ein Mittel zum Anlegen der Sollspannung ($V_{AB}$) an eine Steuerelektrode des Transistors (5),
- Mittel zum Anlegen einer Referenzspannung an den ersten Verstärker (3) sowie einer Verstärkungsspannung an den zweiten Verstärker (6), wobei die Referenzspannung ($V_{REF}$) geringer als die Verstarkungsapannung ($V_{GAIN}$) ist.

**5.** Schaltung nach einem der Ansprüche 1 bis 3, wobei die Blendschutzschaltung (5) umfasst:

- einen MOS-Transistor (5) vom n-Typ, mit einem ersten Anschluss, der an den Eingang des ersten Transimpedanzverstärkers (3) angeschlossen und an eine Anode der Fotodiode (1) angeschlossen ist, sowie einem zweiten Anschluss, der an den Ausgang des ersten Transimpedanzverstärkers (3) angeschlossen ist,
- ein Mittel zum Anlegen der Sollspannung ($V_{AB}$) an eine Steuerelektrode des Transistors (5),
- Mittel zum Anlegen einer Referenzspannung an den ersten Verstärker (3) sowie einer Verstärkungsspannung an den zweiten Verstärker (6), wobei die Referenzspannung ($V_{REF}$) größer als die Verstärkungsspannung ($V_{GAIN}$) ist.

**6.** Schaltung nach einem der Ansprüche 1 bis 5, **da-**

**durch gekennzeichnet, dass** die Sollspannung ($V_{AB}$) gleich der Ausgangsspannung ($V_{S2}$) des zweiten Transimpedanzverstärkers (6) ist.

7. Leseverfahren einer Detektionsschaltung, **dadurch gekennzeichnet, dass** es die folgenden Schritte umfasst:

    - Erzeugen eines Stroms mittels einer in Sperrrichtung betriebenen Fotodiode (1) in Richtung eines Eingangs (E1) eines ersten Transimpedanzverstärkers (3), wobei ein Ausgang (S1) des ersten Transimpedanzverstärkers über einen Abtastkondensator ($C_{DS}$) an einen Eingang (E2) eines zweiten Transimpedanzverstärkers (5) angeschlossen ist, wobei jeder Transimpedanzverstärker (3, 5) einen Eingang und einen Ausgang, die durch ein passives Bauelement verbunden sind, aufweist,
    - Vergleichen der Ausgangsspannung ($V_{S1}$) des ersten Transimpedanzverstärkers (3) mit einer Sollspannung ($V_{AB}$), die anhand der Ausgangsspannung ($V_{S2}$) des zweiten Transimpedanzverstärkers (5) definiert ist,
    - Erzeugen eines Gegenkopplungsstroms an dem Eingang (E1) des ersten Transimpedanzverstärkers (3), wenn die Differenz zwischen der Ausgangsspannung ($V_{S1}$) und der Sollspannung ($V_{AB}$) einen Schwellenwert erreicht, um die Ausgangsspannung ($V_{S1}$) des ersten Transimpedanzverstärkers (3) zu begrenzen.

8. Verfahren nach Anspruch 7, **dadurch gekennzeichnet, dass** die Erzeugung des Gegenkopplungsstroms aus dem Überführen eines Transistors (7), der den Eingang (E1) mit dem Ausgang (S1) des ersten Operationsverstärkers (3) verbindet, in den Durchlasszustand hervorgeht.


**Claims**

1. A detection circuit with correlated double sampling comprising:

    - a first capacitive transimpedance amplifier (3),
    - a photodiode (1) connected to an input (E1) of the first transimpedance amplifier (3),
    - a second capacitive transimpedance amplifier (5),
    - a sampling capacitor ($C_{DS}$) connected between an output (S1) of the first transimpedance amplifier (3) and an input (E2) of the second transimpedance amplifier (5),

    **characterized in that** it comprises an anti-blooming circuit (7, 8, 9) connected between the Input (E1) and output (S1) of the first transimpedance amplifier (3), the anti-blooming circuit (7, 8, 9) comprising:

    - means for comparing (7, 8) the output voltage ($V_{S1}$) of the first transimpedance amplifier (3) with a setpoint voltage ($V_{AB}$) defined from the output voltage ($V_{S2}$) of the second transimpedance amplifier (5), and
    - means for applying (5, 9) a feedback current to the input (E1) of the first transimpedance amplifier (3) when the difference between the output voltage ($V_{S1}$) and the setpoint voltage ($V_{AB}$) reaches a limit value.

2. The circuit according to claim 1, **characterized in that** the sampling capacitor ($C_{DS}$) presents a variable capacitance according to the voltage difference present between the output (S1) of the first transimpedance amplifier (3) and the input (E2) of the second transimpedance amplifier (6).

3. The circuit according to claim 2 wherein the sampling capacitor ($C_{DS}$) is made from a MOS capacitor.

4. The circuit according to any one of claims 1 to 3, wherein the anti-blooming circuit (5) comprises:

    - a p-type MOS transistor (5) with a first terminal connected to the input of the first transimpedance amplifier (3) and connected to a cathode of the photodiode (1) and a second terminal connected to the output of the first transimpedance amplifier (3),
    - means for applying the setpoint voltage ($V_{AB}$) on a control electrode of the transistor (5),
    - means for applying a reference voltage to the first amplifier (3) and a gain voltage to the second amplifier (6), the reference voltage ($V_{REF}$) being lower than the gain voltage ($V_{GAIN}$).

5. The circuit according to any one of claims 1 to 3, wherein the anti-blooming circuit (5) comprises:

    - an n-type MOS transistor (5) with a first terminal connected to the input of the first transimpedance amplifier (3) and connected to an anode of the photodiode (1) and a second terminal connected to the output of the first transimpédance amplifier (3),
    - means for applying the setpoint voltage ($V_{AB}$) on a control electrode of the transistor (5),
    - means for applying a reference voltage to the first amplifier (3) and a gain voltage to the second amplifier (6), the reference voltage ($V_{REF}$) being higher than the gain voltage ($V_{GAIN}$).

6. The circuit according to any one of claims 1 to 5, **characterized In that** the setpoint voltage ($V_{AB}$) is equal to the output voltage ($V_{S2}$) of the second transimpedance amplifier (6).

7. A method for reading a detection circuit, **characterized in that** it comprises the following steps:

- generating a current from a reverse-biased photodiode (1) to an input (E1) of a first transimpedance amplifier (3), an output (S1) of the first transimpedance amplifier being connected to an input (E2) of a second transimpedance amplifier (5) by a sampling capacitor ($C_{DS}$), each transimpedance amplifier (3, 5) having an input and an output connected by a passive element,
- comparing the output voltage ($V_{S1}$) of the first transimpedance amplifier (3) with a setpoint voyage ($V_{AB}$) defined from the output voltage ($V_{S2}$) of the second transimpedance amplifier (5),
- generating a feedback current to the input (E1) of the first trans-impedance amplifier (3) when the difference between the output voltage ($V_{S1}$) and the setpoint voltage ($V_{AB}$) reaches a threshold value so as to limit the output voltage ($V_{S1}$) of the first transimpedance amplifier (3).

8. The method according to claim 7, **characterized in that** generation of the feedback current is caused by tum-on of a transistor (7) connecting the input (E1) to the output (S1) of the first operational amplifier (3).

**Figure 1 (art antérieur)**

**Figure 2 (art antérieur)**

Figure 3

Figure 4

**Figure 5**

**Figure 8**

Figure 6A

Figure 6B

Figure 6C

Figure 6D

Figure 6E

Figure 6F

Figure 6G

Figure 7A

Figure 7B

Figure 7C

Figure 7D

Figure 7E

Figure 7F

Figure 7G

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5448056 A

- US 20030034433 A